# EUROPÄISCHE PATENTSCHRIFT

(11) **EP 2 234 229 B1**
(45) Veröffentlichungstag und Bekanntmachung des Hinweises auf die Patenterteilung: **11.05.2016**
(21) Anmeldenummer: 10002788.7
(22) Anmeldetag: 17.03.2010
(51) Int. Cl.: H02G 1/12

(54) **Abmantelungswerkzeug für Elektrokabel**
Stripping tool for electrical cables
Outil de dénudage de câbles électriques

(30) Priorität: 26.03.2009 IT BZ20090010
(43) Veröffentlichungstag der Anmeldung: 29.09.2010
(73) Patentinhaber: INTERCABLE SRL, 39031 Brunico (BZ) (IT)
(72) Erfinder: Schöpfer, Manuel, 39030 Niedervintl (Bolzano) (IT)
(74) Vertreter: Oberosler, Ludwig

(56) Entgegenhaltungen:
- EP-A- 1 229 621
- EP-A- 1 953 884
- US-A- 3 044 170
- US-A- 5 809 652

## Beschreibung

Aus der US 5,809,652 ist ein Abmantelungswerkzeug für Elektrokabel bekannt welches aus einer an zwei parallelen Führungsstangen gleitenden Halterung für eine Kreisklinge besteht welche durch Drehen einer Gewindespindel in Bezug auf eine, gemäß der Spindelachse, drehbar gelagerten Halterung für zwei Auflagerollen verstellt werden kann. Das Kabel kann mit seiner Längsachse parallel zur Achse der Kreisklinge und zu den Achsen der Auflagerollen eingelegt werden um einen Rundschnitt auszuführen, durch Verdrehen und Festlegen des Halters der Auflagerollen in einen bestimmten Winkel zur Achse der Kreisklinge, kann am Kabelmantel auch ein spiralförmiger Schnitt ausgeführt werden. Das Kabel kann auch mit der Längsachse quer zu den unter sich parallelen Achsen der Auflagerollen und zur Achse der Kreisklinge, zwischen den Führungsstangen hindurch, eingeführt werden um einen Längsschnitt am Kabelmantel auszuführen. In diesem letzten Fall muss allerdings das Kabel entweder mit einem seiner Enden zwischen den Führungsstangen eingeführt werden oder es muss die Halterung an den Enden der Führungsstangen samt der daran koaxial zur Spindelachse drehbar gelagerten Halterung mit den Auflagerollen von den Enden der Führungsstangen abmontiert werden um das Kabel zwischen den Führungsstangen einlegen zu können und, infolge erneuter Montage der Halterung, den Längsschnitt durchführen zu können. Um dieses Werkzeug an einem Kabel ansetzen zu können muss durch Drehen der Gewindespindel der Abstand zwischen den Auflagerollen und der Kreisklinge, dem Kabeldurchmesser entsprechend, angepasst werden. Anschließend muss durch Drehen der Gewindespindel der besagte Abstand vermindert werden bis der Kabel an den Auflagerollen aufliegt und die Kreisklinge den Kabelmantel berührt, darauf muss die Kreisklinge weiter gegen den Kabelmantel, um etwas mehr als dessen Stärke, verstellt werden um den Mantel zu perforieren. Bei der Abnahme des Werkzeuges muss durch Drehen an der Gewindespindel der Abstand zwischen den Auflagerollen und der Kreisklinge erneut vergrößert werden und an einer folgenden Schnittstelle am selben Kabel oder auch an einem Kabel mit dem selben Außendurchmesser und der selben Mantelstärke müssen jedes Mal die besagten Einstellungen vorgenommen werden, was die Arbeitszeiten und die Möglichkeit von Fehleinstellungen erhöht.

Aus der US 3,044,170 ist ein Abmantelungswerkzeug für Elektrokabel bekannt welches aus insgesamt vier Auflagerollen mit zueinander parallelen Achsen besteht wobei zwei der besagten Rollen gegenüber den weitern zwei Rollen durch Betätigen einer Gewindespindel verstellbar sind, eine der Rollen über eine Handkurbel augetrieben werden kann und mindestens eine der Rollen im Mittelbereich eine Kreisklinge aufweist. Das zu bearbeitende Elektrokabel kann nur mit seiner Längsachse quer zu den Achsen der Auflagerollen eingeführt werden, es können ausschließlich Längsschnitte, keine Rundschnitte, am Kabel durchgeführt werden. Die mit dem selben Werkzeug bearbeitbaren Kabeldurchmesser sind sehr begrenzt, eine eventuelle Anpassung an verschiedene Kabeldurchmesser erfordert den Austausch aller Auflagerollen. Bei der Durchführung von Schnitten, auch am selben Kabel, an zueinander beabstandeten Stellen, ist jeweils eine Verstellung der Auflagerollen erforderlich um die Kreisklinge in eine nicht eingedrungene Stellung zu bringen und anschließend an der neuen Schnittstelle wieder in die Eingriffstellung zu bringen indem die Eindringtiefe wiederholt relativ präzise durch Drehen an der Gewindespindel einzustellen ist. Das Werkzeug eignet sich nicht in Zwischenbereichen am Kabel angesetzt zu werden, es ist immer ein "Einfädeln" an einem der Kabelenden notwendig. Die Ausführung mehrerer Schnitte auch am selben Kabel ist zeitaufwändig, Voreinstellungen der Auflagerollen betreffend einen bestimmten Kabeldurchschnitt und eine bestimmte Stärke des Kabelmantels sind nicht möglich.

Aus den DE 2402377, DE 3009888 und EP 0338273, sowie insbesondere auch aus der EP 0610841 des selben Antragstellers, sind handbetätigte Werkzeuge für das Aufschneiden in Längsrichtung des Außenmantels von Elektrokabel bekannt; all diese Werkzeuge bestehen aus einem Element welches die Schneidklinge trägt und an welchem ein Betätigungshebel angelenkt ist welcher einen Zahnsektor aufweist. Die Schneidklinge welche gegebenenfalls einstellbar und/oder rückziehbar am Klingenhalter gelagert ist, verfügt über eine Abflachung welche sich quer zur Klingenschneide erstreckt. Diese Abflachung wird in der Anfangsphase des Schnittes zwischen dem Kabelkörper und dessen Außenmantel infolge Perforieren des Außenmantels eingesetzt, wobei sie während der Fortbewegung der Klinge durch Handhabung des Betätigungshebels nach Art eines Dosenöffners als Rückhalteführung wirkt. Diese bekannten Schneidwerkzeuge sind weiters mit Vorrichtungen um den Lagerpunkt am Betätigungshebel, in Bezug auf die Auflagefläche des Klingenhalters, zu verändern, mit Einstellvorrichtungen zwecks Anpassung der Eindringtiefe der Klinge und mit solchen welche die Durchführung von Schnitten mit genau vorgegebener Länge erleichtern, ausgestattet. Am Klingenhalter sind austauschbare Elemente anbringbar durch welche das Vorstehen der Klinge der Stärke des aufzuschneidenden Außenmantels anpassbar ist. Diese bekannten Werkzeuge sind meist nicht für die Durchführung eines Rundschnittes entlang dem Umfang des Außenmantels welcher häufig notwendig ist, geeignet; nur das in der EP 0610841 beschriebene Werkzeug ermöglicht, außer der Durchführung von Längsschnitten, auch die Durchführung von Rundschnitten, ohne Einsatz von Sonderausstattungen sondern indem zwischen dem Klingenhalter und dem Betätigungshebel eine gelenkige Verbindung vorgesehen ist wodurch die Zuggeometrie zwischen dem Klingenhalter und dem Betätigungshebel dem Außenumfang des Außenmantels des Kabels anpassbar wird.

Aus der FR 8814052 (Pinchon) und aus der IT 1327595 des selben Antragstellers sind Abmantelungswerkzeuge bekannt welche die Form einer Zange haben. Diese bekannten Werkzeuge bestehen wesentlich aus zwei scharnierartig verbundenen Schenkeln um an einer Seite der Scharnierverbindung zwei Griffhebel für die Betätigung zweier an der entgegengesetzten Seite der Scharnierverbindung vorgesehenen Klauen aufzuweisen. Die Klauen dieser Werkzeuge ermöglichen die Durchführung eines Längsschnittes sowie eines Rundschnittes. Die Klauen sind einerseits mit abstehenden Auflagerollen und Scheibenklingen ausgestattet, während an der Gegenseite Kreisklingen abstehend gelagert sind welche für den Rundschnitt am Außenmantel geeignet sind. Während beim Schnitt mit dem in der FR 8814052 beschriebenen Werkzeug der Benutzer gezwungen ist durch einen beachtlichen Kraftaufwand mit der selben Hand, während er das Werkzeug dem Kabel entlang zieht, auch die Schnitttiefe beizubehalten; wird hingegen beim Werkzeug welches in der IT 1327595 beschrieben ist, die Bewegung entlang dem Kabel durch Drehen zweier gegeneinander gerichteter gezahnter Kegelstumpfe erreicht welche mittels Hebel, eventuell mittels Ratschenhebel, angetrieben werden.

Die obgenannten Vorrichtungen oder Werkzeuge weisen den Nachteil auf, dass die Eindringtiefen beider Klingen durch austauschbare Abstandsringe bestimmt werden welche seitlich an den Kreisklingen anbringbar sind, der Benutzer benötigt also eine Serie von Abstandsringen für die unterschiedlichen Stärken der Außenmäntel, weiters ist der Benutzer, um die Eindringtiefe beizubehalten, gezwungen die Griffe des Zangenwerkzeuges, sei es im Falle eines Längsschnittes als auch im Falle eines Rundschnittes, andauernd zusammenzudrücken, natürlich müssen die Abstandsringe für die Kreisklingen jedes Mal wenn sich die Stärke des Außenmantels ändert, ausgetauscht werden. Die Erfindung stellt sich die Aufgabe ein Abmantelungswerkzeug der vorgenannten Art zu schaffen welches geeignet ist die Ausführung der Längs- und der Rundschnitte an Außenmäntel von Elektrokabel samt Abnehmen des abgeschnittenen Teiles des Außenmantels beachtenswert zu vereinfachen ohne dass vom Benutzer ein andauernder Anpressdruck für die Beibehaltung der Schnitttiefe ausgeübt wird. Erfindungsgemäß wird diese Aufgabe wird durch die Gegenstände der unabhängigen Ansprüche 1 und 9 gelöst.

Zur Lösung dieser Aufgabe schlägt die Erfindung die Schaffung eines Werkzeuges vor welches wesentlich aus einem Führungsrahmen besteht an welchem mindestens eine Halterung gleitend gelagert ist welche eine Auflagerolle und einen Klingenträger aufweist und eine Halterung vorgesehen ist an welcher eine Auflagerolle und eine gezahnte Rolle vorgesehen ist welche die Form zweier Kegelstumpfe aufweist welche mit ihren kleineren Grundflächen gegeneinander koaxial verbunden sind und vorzugsweise mittels eines, mit Ratschenmechanismus ausgestatteten, Antriebshebels betätigt werden, ohne jedoch auszuschließen, dass beide Halterungen am selben Führungsrahmen gleitend aufgebaut sind. Der Führungsrahmen besteht aus zwei zueinander parallelen Flacheisen welche zueinander beabstandet sind und an beiden Enden an einem Abstands- und Halteelement befestigt sind.

Das Verstellen der Halterung mit Klingenhalter kann über eine Gewindespindel erfolgen welche zwischen den beiden Längsführungen des Rahmens vorgesehen ist und in eine entsprechende Gewindebohrung an der besagten Halterung eingeschraubt ist, diese Spindel ist mittels Drehgriff betätigbar welcher drehbar aber nicht axial verschiebbar am entsprechenden Abstands- und Halteelement des Rahmens gelagert ist. Die jeweilige Position der Halterung mit Klingenträger kann an einer Skala, welche an einer Längskante einer Führung oder beider Führungen des Führungsrahmens und/oder an einer Skala welche am, mit der Gewindespindel verbundenen, Drehgriff vorgesehen ist, abgelesen werden. Die Halterung mit gezahnter Rolle kann, gemäß einer vorbestimmten Laufstrecke, an den Führungen des Rahmens mittels eines Hebels verschoben werden welcher, gemäß einer quer zur Längserstreckung des Führungsrahmens und der Gewindespindel verlaufenden Achse, schwenkbar an einem der Abstands- und Halteelemente an den Enden des Führungsrahmens gelagert ist und im mittigen Bereich mittels Pleuel mit der Halterung welche die gezahnte Rolle trägt, gelenkig mechanisch verbunden. Die Halterung mit gezahnter Rolle wird durch eine spiralförmige Zugfeder in Richtung des besagten Halte- und Abstandselements gezogen an welchem der Hebelgelagert ist. Das Pleuel welches den Hebel mit der Halterung mit gezahnter Rolle verbindet ist so angelenkt dass bei, am Führungsrahmen anliegendem Hebel, das Pleuel etwas den toten Punkt überschritten hat und unter Einwirkung der aufgeladenen Rückholfeder die Beibehaltung dieser äußersten Position der Halterung mit gezahnter Rolle in Richtung der Halterung mit Klingenhalter gesichert wird. Das Ausrasten des Hebels aus dieser Halteposition erfolgt durch Betätigen eines bekannten Entriegelungsmechanismus welcher am freien Ende des Hebels vorgesehen ist.

Eines der Abstands- und Halteelemente an den Enden des Führungsrahmens, eventuell das selbe Abstands- und Halteelement an welchem der Hebel gelagert ist welche die Halterung mit gezahnter Rolle bewegt, ist frontal mit einer Klaue ausgestattet welche schwenkbar gelagert ist und durch eine Sperrklinke in Ruhestellung zurückgehalten wird. Diese Klaue dient, zusammen mit einer Verzahnung welche frontal an den Endbereichen der beiden, seitlich am Abstands- und Halteelement des Führungsrahmens befestigten, Führungen vorgesehen ist, um den geschnittenen Teil des Außenmantels des Kabels abzunehmen indem die Klaue mit dem freien Ende in den Längsschnitt eingesetzt wird und der Rahmen des Werkzeuges, welcher mit der Verzahnung an der Außenfläche des Außenmantels anliegt, so bewegt wird dass der besagte Schnitt erweitert wird um schließlich die Abnahme des geschnittenen Außenmantelstückes zu erreichen.

Der erfindungsgemäße Klingenhalter besteht aus einer zylindrischen Buchse in welcher koaxial drehbar aber nicht verschiebbar eine Buchse belagert ist welche rückseitig mit zwei Griffen ausgestattet ist um sie verdrehen zu können. Innen in dieser Buchse ist im vorderen Bereich, koaxial zu dieser und axial verschiebbar, eine weitere Buchse gelagert an welcher, mittels Zapfen mit Achse quer zur Längsachse der Buchse, eine Kreisklinge gelagert ist während im hinteren Bereich die selbe Buchse mit einer koaxialen Gewindebohrung versehen ist in welche ein Gewindebolzen eingeschraubt ist welcher mittels drehbarem aber nicht längsbewegbarem Drehgriff betätigt werden kann. Der besagte Drehgriff ist im Bereich zwischen den von der Buchse abstehenden hinteren Griffen vorgesehen und dient für die Einstellung der Schnitttiefe der Kreisklinge welche teilweise durch eine entsprechende Schlitzöffnung hervorragt welche an einem stirnseitig an der mit hinteren Griffen versehenen Buchse aufgesetzt ist. Die besagten hinteren Griffe dienen um die Kreisklinge, zwecks Durchführung von Rundschnitten, in vertikale Position, zwecks Durchführung von Längsschnitten, in horizontale Position und eventuell, zwecks Durchführung spiralenförmiger Schnitte, in geneigte Position zu drehen; vorteilhafterweise sind an der Buchse innerhalb der äußeren zylindrischen Buchse, in radial gegenüberliegender Position, zwei Kugeln gelagert zwischen welchen eine einzige Druckfeder wirkt. Die Kugel welche gegen die Innenfläche der äußeren Buchse wirkt kann in Sitze einrasten welche an dieser Innenfläche vorgesehen sind, wobei die vertikale und die horizontale Position der Klinge und eventuell eine oder mehrere geneigte Positionen vorgegeben werden; die zweite Kugel hingegen welche nach innen wirkt kann in mehrere Sitze eingreifen welche an einem vorstehenden Ringbereich der Gewindespindel welche durch Drehgriff betätigt werden kann vorgesehen sind, wobei unterschiedliche Einstellpositionen betreffend den Vorstand der Klinge (Schnitttiefe) vorgegeben sind; vorzugsweise entspricht jede Einrasposition einer Verstellung der Klinge um 0,1 mm. Vorteilhafterweise ist der besagte Drehgriff mit einer numerischen Skala und mindestens einer der vorstehenden Griffe mit einer Bezugslinie versehen.

Um mit dem erfindungsgemäßen Werkzeug, bei welchem beide Halterungen durch unterschiedliche Mechanismen der oben beschriebenen Art verstellbar sind, einen Längsschnitt entlang dem Außenmantel eines Elektrokabels durchzuführen, wird die Klinge in horizontale Position gebracht indem die Griffe welche hinten von der Buchse des Klingenhalters abstehen entsprechend bewegt werden, während durch Drehen am, zwischen den besagten abstehenden Griffen, vorgesehenen Drehgriff die Schnitttiefe, entsprechend der Stärke des Außenmantels, bestimmt wird. Die verstellbare Halterung samt der Klinge wird in die erforderliche Stellung in Bezug auf den Außendurchmesser des Kabels gebracht, indem die Gewindespindel mittels dem entsprechenden Drehgriff gedreht wird. Nachdem das Werkzeug auf diese Weise eingestellt ist, wird der Spannhebel welcher auf den verstellbaren Halter mit gezahnter Rolle wirkt entriegelt, dieser Halterung wird durch die Rückholfeder in Richtung des entsprechenden Endes des Führungsrahmens bewegt; in dieser Position kann das Werkzeug leicht außen am Kabel angesetzt werden, wobei der Führungsrahmen eine Position von ca. 90° in Bezug auf die Achse des Kabels einnimmt und wobei der Kabel zwischen den Auflagerollen der beiden Halterungen und zwischen der gezahnten Rolle und der Klinge liegt. Durch anschließendes Betätigen des Spannhebels wird die Halterung mit gezahnter Rolle und Auflagerolle entlang der Führungen des Werkzeugs, gegen die Halterung mit Klingenhalter und mit glatter Auflagerolle bewegt, wobei schließlich die Klinge in den Außenmantel des Kabels eindringt. Der Spannhebel wird selbsttätig in geschlossener Stellung gehalten sobald das Verbindungspleuel eine Position jenseits des toten Punktes einnimmt, durch die Wirkung der Rückholfeder auf die Halterung mit gezahnter Rolle wird diese Position gehalten. Anschließend kann die gezahnte Rolle mittels Hebel mit Ratschenmechanismus oder mittels einer einfacher Kurbelwelle betätigt werden, während dieser Betätigung führt die Klinge den Längsschnitt aus. Wahrend des Schneidens betätigt der Benützer nur mit einer Hand den Hebel welcher die gezahnte Rolle antreibt, diese Betätigung erfordert einen minimalen Kraftaufwand auch im Falle von Außenmäntel mit großer Stärke und/oder aus extrem resistenten Werkstoffen, während die zweite Hand frei bleibt und eventuell für eine Nachjustierung der Schnitttiefe oder für die Führung des Gerätes gemäß einer geraden Schnittlinie zur Verfügung steht.

Um mit dem selben Werkzeug einen Rundschnitt durchzuführen sind wesentlich die selben vorher erwähnten Arbeitsgänge durchzuführen, mit dem Unterschied dass die Klinge, durch Drehen an den hinten von der Buchse der Klingenhalterung abstehenden Griffe, in die vertikale Position gebracht wird und dass nicht die gezahnte Rolle angetrieben wird sondern der Führungsrahmen des Werkzeuges ergriffen wird und in eine Richtung oder in die Gegenrichtung um den Kabel herum bewegt wird. Natürlich ist bei Schnitten am selben Kabel oder an einer gleichen Kabelart keine Korrektur der Schnitttiefe entsprechend der Mantelstärke oder der Position der verstellbaren Halterung mit Klingenhalter, entsprechend dem Kabelaußendurchmesser, notwendig.

Um die Abnahme des geschnittenen Teiles des Außenmantels zu erleichtern, ist das erfindungsgemäße Abmantelungswerkzeug an einem Ende des Führungsrahmens, vorzugsweise am Ende mit verstellbarer Halterung mit gezahnter Rolle, mit einer Klaue ausgestattet welche einen Greifzahn aufweist, welche durch Betätigen einer Sperrklinke in Arbeitsstellung ausschwenkt. Diese Klaue ist schwenkbar gemäß einer, zu den Führungen des Führungsrahmens, quer verlaufenden Achse gelagert, in Arbeitsstellung wird der Greifzahn der Klaue zwischen die Ränder des Längsschnittes eingeführt während die Verzahnung welche stirnseitig am entsprechenden Ende des Führungsrahmens vorgesehen sind, seitlich am selben Außenmantel angelegt werden, indem der Führungsrahmen als Hebel wirkt kann so der Außenmantel leicht außeinandergespreizt werden um vom Kabel abgenommen zu werden.

Die Erfindung wird anschließend anhand eines, in den beigelegten Zeichnungen schematisch dargestellten, vorzuziehenden Ausführungsbeispieles eines erfindungsgemäßen Abmantelungswerkzeuges für Elektrokabel näher erklärt, dabei erfüllen die Zeichnungen rein erklärenden, nicht begrenzenden Zweck.

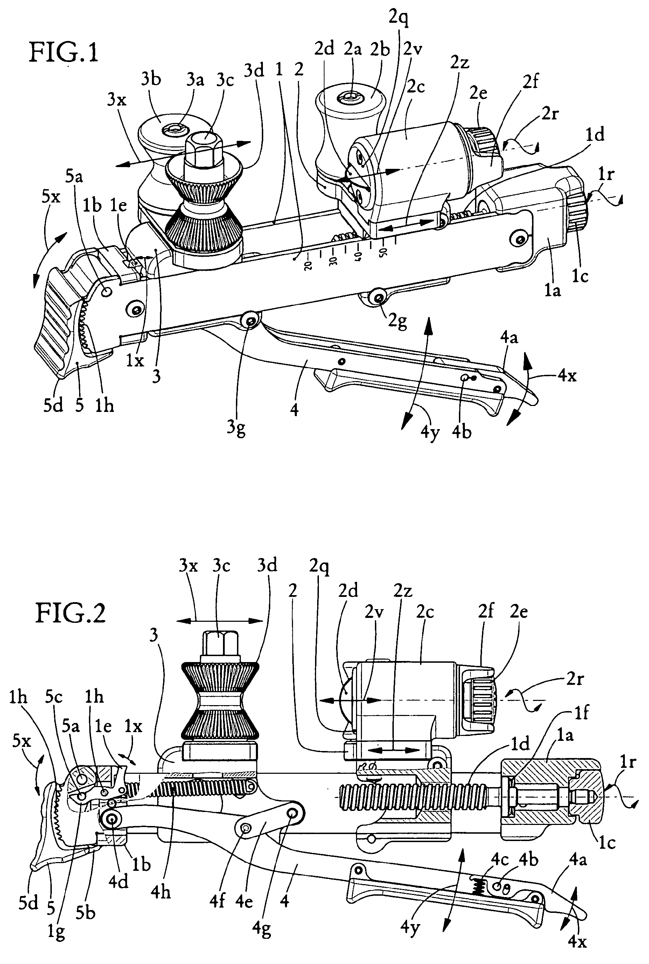

Die Fig. 1 zeigt in perspektivischer Darstellung ein erfindungsgemäßes Abmantelungswerkzeug mit dem Spannhebel in geöffneter Position und mit der Klinge in horizontaler Stellung.
Die Fig. 2 zeigt in Seitenansicht das in Fig. dargestellte Abmantelungswerkzeug mit der Klinge in vertikaler Stellung, ohne einer der Führungen des Rahmens, mit den Abstands- und Halteelementen des Führungsrahmens und mit der verstellbaren Halterung für den Klingenhalter, in Schnittdarstellung.
Die Fig. 3 zeigt das selbe in Fig. 1 dargestellte Abmantelungswerkzeug in Arbeitsstellung während eines Längsschnittes an einem mit strichlierten Linien angedeuteten Kabel, wobei der Spannhebel in arretierter geschlossener Stellung ist und der Hebel für die Betätigung der gezahnten Rolle an dieser Rolle aufgesetzt ist.
Die Fig. 4 zeigt den Klingenhalter in perspektivischer Darstellung, teilweise in Schnittdarstellung und mit der Klinge in vertikaler vorstehender Stellung.

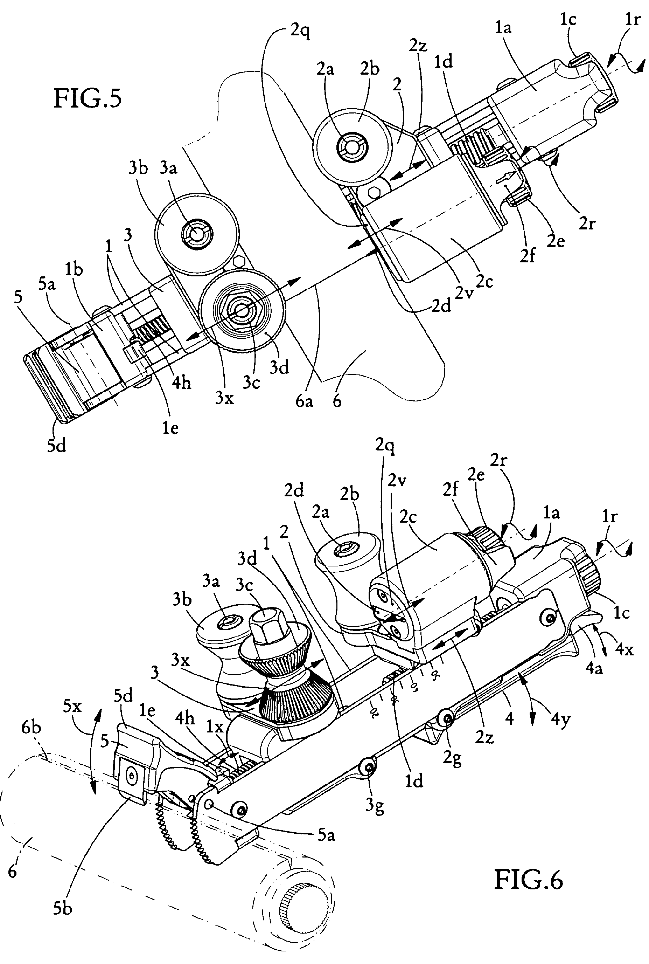

Die Fig. 5 zeigt die Draufsicht auf ein Abmantelungswerkzeug während der Durchführung eines Rundschnittes an einem Kabel.
Die Fig. 6 ist eine perspektivische Darstellung des in den Fig. 1, 2, 3, 4 gezeigten Abmantelungswerkzeugs, wobei der Zahn einer, an einem Ende des

Führungsrahmens, vorgesehenen Klaue, zwischen den Rändern eines vorher an einem mit strichlierten Linien angedeuteten Kabel durchgeführten Längsschnitt, eingesetzt ist und wobei die stirnseitigen Verzahnungen der Längsführungen seitlich am Außenmantel des Kabels anliegen.

An einem Rahmen welcher aus zwei zueinander parallelen Führungen 1 besteht welche an einem ihrer Enden durch ein Abstands- und Halteelement 1 a und an den gegenüberliegenden Enden durch ein Abstands- und Halteelement 1 b verbunden sind, sind in Längsrichtung verstellbar 2z, 3x eine Halterung 2 vorgesehen mit einer, um einen feststehenden Zapfen 2a drehbarer, Auflagerolle und mit einer Klingenhalterung 2c sowie eine Halterung 3 vorgesehen mit einer, um einen Zapfen 3a drehbaren, Auflagerolle 3b und einer gezahnten Rolle 3d welche um einen, zum Zapfen 3a der Auflagerolle, parallelen Zapfen drehbar ist und im oberen Bereich einen Sechskantkopf 3c für das Ansetzen eines Hebels 7 mit Ratschenmechanismus aufweist.

Die Verstellung 2z der Halterung 1 mit Klingenhalter 2c erfolgt über eine Gewindespindel 1 d welche drehbar 1r aber nicht axial verschiebbar am Abstands- und Halteelement 1 a gelagert und mit einem Drehgriff 1 c verbunden ist. Vorteilhafterweise können zwischen einem von der Gewindespindel abstehenden Kragen und einem entsprechenden Sitz am Abstands- und Halterungselement 1 a elastische Federelemente1f, z.B. Tellerfedern, eingesetzt sein.
Die Verstellung 3x der Halterung 3 mit gezahnter Rolle 3d erfolgt durch die Schwenkbewegung 4y des Spannhebels 4 welcher mit einem Ende am Abstands- und Halterungselement 1 b gelagert 4d ist, wobei der selbe Hebel 4 im mittleren Bereich mittels Pleuel 4e und Zapfen 4f, 4g mit der verstellbaren Halterung 3 verbunden ist welche durch eine spiralenförmige Zugfeder 4h in Richtung Abstands- und Halteelement 1 b gezogen wird. Die Gelenksgeometrie zwischen dem Spannhebel 4, dem Pleuel 4e mit Zapfen 4f, 4g und der verstellbaren Halterung 3 ist derart, dass bei vollständig geschlossenem, an den Führungen 1 des Werkzeugrahmens anliegendem Hebel 4, das Pleuel 4e sich in einer Position jenseits des überwundenen toten Punktes befindet, wobei diese Position durch die Wirkung der Rückholfeder 4h beibehalten wird. Diese Arretierposition des Spannhebels 4 ist auf bekannte Art durch Betätigen eines kleinen Hebels 4a entriegelbar welcher am freien Ende des Spannhebels 4 schwenkbar 4x gelagert 4b ist und durch eine Druckfeder 4c in Ruhestellung gehalten wird.
Der Klingenhalter 2c ermöglicht erfindungsgemäß die Ausrichtung der Kreisklinge 2d in eine vertikale Stellung für den Rundschnitt an der Außenummantelung des Kabels 6, bzw. in eine horizontale Stellung für den Längsschnitt an der Ummantelung, weiters ist durch ihn die Einstellung des Vorstandes der selben Klinge 2d, je nach Stärke der Ummantelung des Kabels 6 (Schnitttiefe), möglich. Um dies zu erreichen ist in einer Außenbuchse 2c eine Buchse 2j drehbar 2x aber nicht axial verstellbar gelagert welche stirnseitig einen Deckel 2q mit Schlitzöffnung für den Durchtritt der Klinge 2d aufweist. Innerhalb dieser Buchse ist eine Innenbuchse 2n eingesetzt welche mittels Querstift 2m gegen Verdrehung bezüglich der Buchse 2j gesichert ist, dabei greift der besagte Querstift in Längsführungsschlitzen 2k an der äußeren Buchse 2j ein. An dieser inneren Buchse 2n ist stirnseitig, mittels querliegendem Zapfen 2p, die Kreisklinge 2d drehbar 2y gelagert. An der gegenüberliegenden Stirnseite ist die innere Buchse 2n mit einer Gewindebohrung versehen in welche ein Gewindezapfen 2i eingeschraubt ist und welcher am entgegengesetzten Ende 2h einen Drehgriff 2e trägt. Im mittleren Bereich zwischen dem Gewindeteil des Zapfens 2i und dem Teil für die Aufnahme des Drehgriffes 2e ist ein vorstehender Kragen mit Sitzen 2u für eine Kugel 2s vorgesehen welche von einer Druckfeder 2t beaufschlagt wird welche radial in der Buchse 2j eingesetzt ist um verschiedene Positionen der Verdrehung 3r des Drehgriffes 2e, zwecks Einstellung des Vorstandes der Klinge 2d welche den Schlitz am stirnseitigen Deckel 2q durchdringt, zu sichern. Die selbe Druckfeder 2t wirkt mit ihrem zweiten Ende auf eine zweite Kugel 2r welche in entsprechende Sitze an der inneren Oberfläche der Buchse 2c dringen um, beim Verdrehen 2x der hinten von der Buchse 2j abstehenden Griffe 2f, jeweils die horizontale Stellung (Längsschnitt), die vertikale Stellung (Rundschnitt) und eventuell eine oder mehrere geneigte Stellungen (spiralenförmiger Schnitt) der Klinge 2d vorzugeben.

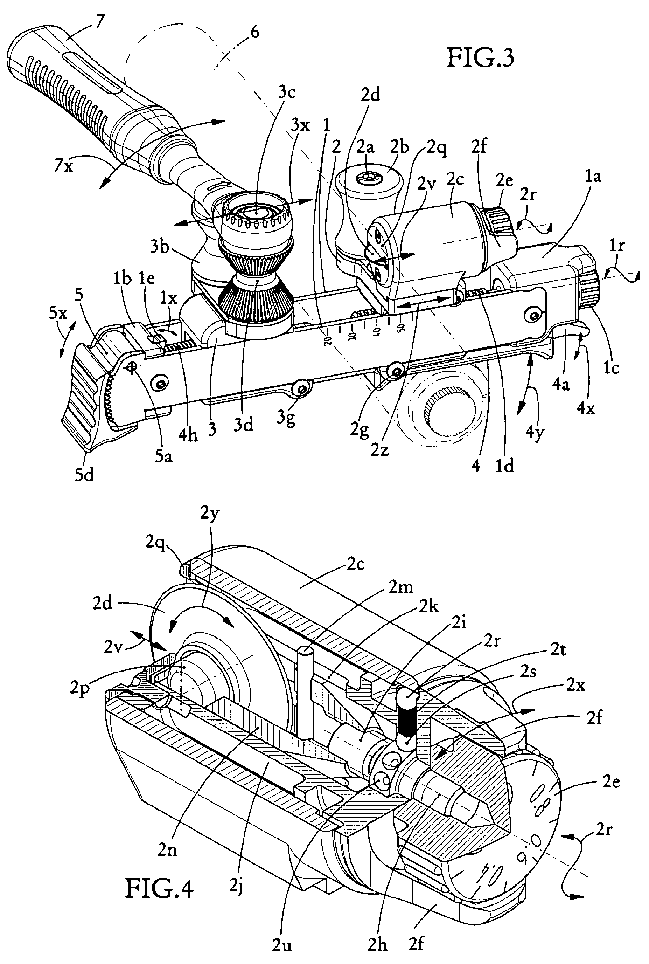

Für die Durchführung eines Längsschnittes (Fig. 3) seitlich entlang der Außenummantelung des Kabels 6 sind die folgenden Arbeitsgänge durchzuführen:
- Positionieren der Klinge 2d in horizontaler Stellung durch Drehung 2x an den vorstehenden Griffen 2f der Buchse 2j des Klingenhalters,
- Einstellung 2v des Vorsprunges der Klinge 2d (Schnitttiefe) entsprechend der Stärke der Außenummantelung durch Drehen 2r am Drehgriff 2e,
- Verstellen 2z der gleitenden Halterung 2 mit Klingenhalter 2c durch Drehen 1r am Drehgriff 1c, entsprechend dem Außendurchmesser des Kabels,
- Verstellen 3x der gleitenden Halterung 3 mit gezahnter Rolle 3d um diese von der Halterung 2 mit Klingenhalter 2c zu entfernen indem der Spannhebel 4 entriegelt 4x wird und durch Schwenken 4y von der geschlossenen, an den Führungen 1 anliegenden, Stellung in die maximal geöffnete Stellung gebracht wird,
- Ansetzen des Werkzeuges am Kabel 6 so dass dieser zwischen den Auflagerollen 2b, 3b, bzw. zwischen der gezahnten Rolle 3d und der Klinge 2d liegt,
- Schließen des Spannhebels 4 bis er die Arretierstellung anliegend an den Führungen 1 erreicht wodurch die Auflage des Außenmantels des Kabels 6 an den Auflagerollen 2b, 3b und an der gezahnten Rolle 3d und das Eindringen der Klinge 2d in die Außenummantelung erreicht wird, wobei ein eventuelles teilweises Komprimieren der elastischen Elemente 1f, welche zwischen der Gewindespindel 1 d und dem Abstands- und Halteelement 1 a eingesetzt sind, erfolgt,
- Ansetzen des Hebels 7 am Sechskantkopf 3c der gezahnten Rolle 3d,
- Betätigen 7x des Hebels 7 um das Werkzeug in Querposition zum Kabel 6, entlang diesem weiterzubewegen und dabei den Längsschnitt an der Außenummantelung auszuführen,
- Entriegelung des Spannhebels 4 mit anschließender maximaler Öffnung des Hebels und Abnahme des Werkzeuges vom Kabel 6.

Für die Durchführung eines Rundschnittes rings um die Außenummantelung eines Kabels 6 sind die folgenden Arbeitsgänge durchzuführen:
- Positionieren der Klinge 2d in vertikaler Stellung durch Drehen 2x an den vorstehenden Griffen 2f der Buchse 2j des Klingenhalters,
- Einstellung des Vorstandes der Klinge 2d (Schnitttiefe), wie oben,
- Verstellen 2z der gleitenden Halterung 2mit Klingenhalter 2c gemäß dem Außendurchmesser des Kabels, wie oben,
- Verstellen 3x der gleitenden Halterung 3x, Ansetzen des Werkzeuges am Kabel 6 und darauf Schließen des Spannhebels 4, wie oben,
- Drehen des Werkzeuges um mindestens 360° rund um den Kabel 6 wobei die Längsführungen 1 als Hebel dienen,
- Entsichern des Spannhebels 4, maximales Öffnen des Hebels und Abnahme des Werkzeuges vom Kabel 6.

Um den geschnittenen Teil des Außenmantels vom Kabel 6 abzunehmen sind folgende Arbeitsgänge durchzuführen:
- Entriegeln der Klaue 5 aus der Ruhestellung durch Betätigen 1 x der Sperrklinke 1e welche schwenkbar am Abstands- und Halterungselement 1 b gelagert 1 h ist, dabei wird der Stift 5c an der Klaue 5 freigegeben damit diese um den Lagerzapfen 5a am Abstands- und Halterungselement 1 b durch Ziehen am Hahn 5d in Arbeitsstellung geschwenkt werden kann,
- Einführen des Zahnes 5b der Klaue zwischen den Rändern des Längsschnittes 6b am Außenmantel des Kabels 6 durch Drücken auf den Hahn 5d,
- Anlegen der Verzahnungen 1 h der Führungsenden 1 seitlich am Außenmantel,
- Aufspreizen der Ränder am Längsschnitt 6b durch Hebelwirkung über die Führungen 1 bis der geschnittene Teil des Außenmantels abgenommen werden kann,
- Rückführung 5x der Klaue 5 in Ruheposition wobei die Verzahnungen 1 h abgedeckt werden und die Sperrklinke einrastet.

Durch den extrem kompakten Aufbau des erfindungsgemäßen Werkzeugs ist dieses sehr handlich in der Anwendung auch wenn der Platz im Bereich des Kabels 6 begrenzt ist.

## Patentansprüche

1. Abmantelungswerkzeug für die Durchführung von Längs- und von Rundschnitten im Außenmantel eines Elektrokabels (6) welches mit gegenüberliegend angeordneten Auflagerollen (2b, 3b) für das Kabel (6), mit einer gezahnten durch Hebel (7) oder Handkurbel betätigbaren Rolle (3d) und mit einer Kreisklinge (2d) für das Schneiden des Außenmantels des Kabels (6) ausgestattet ist, wobei die besagten Auflagerollen (2b, 3b) und die gezahnte Rolle (3d) in einer Ebene beweglich sind, welche senkrecht zu den Drehachsen der Rollen verläuft, wobei mindestens eine der Auflagerollen (2b, 3b) zusammen mit der Kreisklinge (2d), welche in einem Klingenhalter (2c) gelagert ist, auf einer gleitenden (2z) Halterung (2) aufgebaut ist, wobei mindestens eine weitere der Auflagerollen (2b, 3b) zusammen mit der gezahnten Rolle (3d) auf einer zweiten gleitenden (3x) Halterung (3) aufgebaut ist, wobei beide gleitenden alterungen (2, 3) entlang einem Paar von Führungen (1) verstellbar sind, welche zueinander parallel und beabstandet sind, und zusammen mit zwei Abstands- und Halterungselementen (1a,1b), welche an den entgegengesetzten Enden der besagten Führungen (1) angebracht sind, einen steifen Rahmen bilden und wobei die gleitende Halterung (2), welche die Kreisklinge (2d) trägt, durch Drehen (1r) an einem Drehgriff (1c) über eine Gewindespindel (1d) bewegt wird, welche mit dem Drehgriff verbunden ist, und wobei die gleitende Halterung (3) mit der gezahnten Rolle (3d) durch einen Hebel (4) bewegt wird, welcher zwischen den Führungen (1) oder einem der Abstands- und Halterungselemente (1a, 1b) und der gleitenden Halterung (3) wirkt, wobei der besagte Hebel (4) in einer Spannposition selbsttätig oder durch Betätigen einer eigenen Sperrklinke, arretiert bleibt.

2. Abmantelungswerkzeug gemäß Anspruch 1, **dadurch gekennzeichnet, dass** der Hebel (4) eine Art Spannhebel mit selbsttätiger Arretierung ist um die geschlossene, an den Führungen (1) anliegende, Position beizubehalten.

3. Abmantelungswerkzeug gemäß Anspruch 1, **dadurch gekennzeichnet, dass** die Kreisklinge (2d) derart gelagert ist dass sie zwei Arbeitsstellungen einnehmen kann, eine vertikale parallel zu den Drehachsen der Auflagerollen (2b, 3b) und der gezahnten Rolle (3d) für die Durchführung von Rundschnitten und eine horizontale, um 90° verdreht zur ersten Stellung, für die Durchführung von Längsschnitten.

4. Abmantelungswerkzeug gemäß den Ansprüchen 1, und 3 **dadurch gekennzeichnet, dass** die Kreisklinge (2d) so gelagert ist dass sie außer der vertikalen und der horizontalen Arbeitsstellungen auch eine oder mehrere geneigte Stellungen, für die Durchführung von spiralförmigen Schnitten am Außenmantel, einnehmen kann.

5. Abmantelungswerkzeug gemäß Anspruch 1, **dadurch gekennzeichnet, dass** die Kreisklinge (2d) so gelagert ist dass der Vorstand der Klinge, in Bezug auf die entsprechende Stirnfläche (2q) des Klingenhalters (2c), einstellbar ist.

6. Abmantelungswerkzeug gemäß Anspruch 1, **dadurch gekennzeichnet, dass** der Klingenhalter (2c) für die Kreisklinge (2d) innenliegend eine drehbare (2x) Buchse (2j) trägt von welcher rückwärts Betätigungsgriffe (2f) abragen während sie stirnseitig eine Wand (2q) mit Schlitz für die Kreisklinge (2d) aufweist, dass innen in der besagten Buchse (2j) koaxial zu dieser eine weitere Buchse (2n) eingesetzt ist welche gegen Drehung in Bezug auf die äußere Buchse (2j) mittels Querstift (2m) gesichert ist, wobei dieser in Längsschlitzen (2k) an der äußeren Buchse (2j) durch Drehen (2r) eines Drehgriffes (2e) axial verstellt (2v) wird, dabei ist dieser mit einem Zapfen (2h) verbunden welcher einstückig mit einem Gewindezapfen (2i) ist und in eine Gewindebohrung hinten an der inneren Buchse (2n) an welcher stirnseitig die Kreisklinge (2d) drehbar (2y) gelagert (2p) ist, eingreift und dass der besagte drehbare (2r) Gewindezapfen (2i) gegen axiales Verschieben durch Auflage einerseits mittels vorstehendem Ring (2u) gegen eine entsprechende innere Ringfläche hinten an der äußeren Buchse (2j) und an der Gegenseite mittels der Ringfläche des Drehgriffes (2e), gesichert ist.

7. Abmantelungswekzeug gemäß Anspruch 1, **dadurch gekennzeichnet, dass** die gleitende Halterung (3) mit gezahnter Rolle (3d) durch eine Zugfeder (4h) in Richtung Abstands- und Halterungselement (1 b) gezogen wird.

8. Abmantelungswerkzeug gemäß Anspruch 1, **dadurch gekennzeichnet, dass** zwischen der Gewindespindel (1d) und dem entsprechenden Abstands- und Halterungselement (1a) durch welches sich die Gewindespindel hindurch erstreckt, elastische Druckelemente (1f) eingesetzt sind.

9. Abmantelungswerkzeug für die Durchführung von Längs- und von Rundschnitten im Außenmantel eines Elektrokabels (6) welches mit gegenüberliegend angeordneten Auflagerollen (2b, 3b) für das Kabel, mit einer gezahnten durch Hebel (7) oder Handkurbel betätigbaren Rolle (3d) und mit einer Kreisklinge (2d) für das Schneiden des Außenmantels des Kabels ausgestattet ist, wobei die besagten Auflagerollen und die gezahnte Rolle (3d) in einer Ebene beweglich sind welche senkrecht zu den Drehachsen der Rollen verläuft, wobei mindestens eine der Auflagerollen (2b, 3b) zusammen mit der Kreisklinge (2d) welche in einem Klingenhalter (2c) gelagert ist auf einer gleitenden Halterung (2) aufgebaut ist, wobei mindestens eine weitere der Auflagerollen (2b, 3b) zusammen mit der gezahnten Rolle (3d) auf einer zweiten gleitenden Halterung (3) aufgebaut ist, wobei beide gleitenden alterungen (2, 3) entlang einem Paar von Führungen (1) verstellbar sind, welche zueinander parallel und beabstandet sind, und zusammen mit zwei Abstands- und Halterungselementen (1a, 1b), welche an den entgegengesetzten Enden der besagten Führungen angebracht sind, einen steifen Rahmen bilden und wobei die gleitende Halterung (2), welche die Kreisklinge (2d) trägt, durch einen Hebel (4) bewegt (2z) wird, welcher zwischen den Führungen (1) oder einem der Abstands- und Halterungselemente (1a, 1b) und der gleitenden Halterung (3) wirkt, wobei der besagte Hebel (4) in einer Spannposition selbsttätig oder durch Betätigen einer eigenen Sperrklinke, arretiert bleibt, während die gleitende Halterung (3) mit gezahnter Rolle (3d) mittels einer Gewindespindel (1d) bewegt wird.

## Claims

1. A stripping tool for carrying out longitudinal sections and round sections in the outer sheath of an electric cable (6), which is equipped with oppositely arranged supporting rollers (2b, 3b) for the cable (6), with a toothed roller (3d), which can be actuated by means of a lever (7) or crank handle, and with a circular blade (2d) for cutting the outer sheath of the cable (6), wherein said supporting rollers (2b, 3b) and the toothed roller (3d) are movable in a plane that extends perpendicularly to the rotation axes of the rollers, wherein at least one of the supporting rollers (2b, 3b) is built together with the circular blade (2d), which is supported in a blade holder (2c), on a sliding (2z) support (2), wherein at least one other of the supporting rollers (2b, 3b) is built together with the toothed roller (3d) on a second sliding (3x) support (3), wherein the two sliding supports (2, 3) are adjustable along a pair of guides (1), which are parallel to one another and spaced apart, and form together with two spacer and support elements (1a, 1b), which are mounted on the opposite ends of said guides (1), a rigid frame, and wherein the sliding support (2), which carries the circular blade (2d), is moved by turning (1r) a turning handle (1c) via a threaded spindle (1d), which is connected to the turning handle, and wherein the sliding support (3) is moved with the toothed roller (3) by a lever (4), which operates between the guides (1) or one of the spacer and support elements (1a, 1b) and the sliding support (3), wherein said lever (4) remains locked in a clamping position, automatically or by actuating a separate pawl.

2. The stripping tool according to claim 1, **characterized in that** the lever (4) is kind of a tension lever with automatic locking device to maintain the closed position abutting against the guides (1).

3. The stripping tool according to claim 1, **characterized in that** the circular blade (2d) is supported such that it can adopt two working positions, a vertical position parallel to the rotation axes of the supporting rollers (2b, 3b) and of the toothed roller (3d) for carrying out circular sections and a horizontal position which is rotated by 90° in relation to the first position, for carrying out longitudinal sections.

4. The stripping tool according to claims 1 and 3, **characterized in that** the circular blade (2d) is supported in such a way that in addition to the vertical and horizontal working positions it can also adopt one or more inclined positions, for carrying out spiral sections on the outer sheath.

5. The stripping tool according to claim 1, **characterized in that** the circular blade (2d) is supported so as to adjust the projection of the blade in relation to the corresponding front face (2q) of the blade holder (2c).

6. The stripping tool according to claim 1, **characterized in that** the blade holder (2c) for the circular blade (2d) carries a rotatable (2x) sleeve (2j) on the inside, from which actuation handles (2f) protrude rearwards, while it has a wall (2q) with slots for the circular blade (2d) on the front side, that on the inside in said sleeve (2j) there is inserted, coaxially to said sleeve, another sleeve (2n), which is secured against rotation in relation to the outer sleeve (2j) by means of a transverse pin (2m), wherein said transverse pin is axially adjusted (2v) in longitudinal slots (2k) on the outer sleeve (2j) by turning (2r) a turning handle (2e), and said turning handle is connected to a journal (2h), which is integral with a threaded journal (2i) and engages in a threaded bore on the rear side of the inner sleeve (2n), where the circular blade (2d) is rotatably (2y) mounted (2p) on the front side, and that said rotatable (2r) threaded journal (2i) is secured against axial displacement by the support, on the one hand, by means of the protruding ring (2u) against a corresponding inner annular surface on the rear side of the outer sleeve (2j) and on the opposite side by means of the annular surface of the turning handle (2e).

7. The stripping tool according to claim 1, **characterized in that** the sliding support (3) is pulled with toothed roller (3d) by a tension spring (4h) in the direction of the spacer and support element (1b).

8. The stripping tool according to claim 1, **characterized in that** elastic pressure elements (1f) are inserted between the threaded spindle (1d) and the corresponding spacer and support element (1a), through which the threaded spindle extends.

9. A stripping tool for carrying out longitudinal sections and round sections in the outer sheath of an electric cable (6), which is equipped with oppositely arranged supporting rollers (2b, 3b) for the cable, with a toothed roller (3d), which can be actuated by means of a lever (7) or crank handle, and with a circular blade (2d) for cutting the outer sheath of the cable, wherein said supporting rollers and the toothed roller (3d) are movable in a plane that extends perpendicularly to the rotation axes of the rollers, wherein at least one of the supporting rollers (2b, 3b) is built together with the circular blade (2d), which is supported in a blade holder (2c), on a sliding support (2), wherein at least one other of the supporting rollers (2b, 3b) is built together with the toothed roller (3d) on a second sliding support (3), wherein the two sliding supports (2, 3) are adjustable along a pair of guides (1), which are parallel to one another and spaced apart, and form together with two spacer and support elements (1a, 1b), which are mounted on the opposite ends of said guides, a rigid frame, and wherein the sliding support (2), which carries the circular blade (2d), is moved by a lever (4), which operates between the guides (1) or one of the spacer and support elements (1a, 1 b) and the sliding support (3), wherein said lever (4) remains locked in a clamping position, automatically or by actuating a separate pawl, while the sliding support (3) with toothed roller (3d) is moved by means of a threaded spindle (1d).

## Revendications

1. Outil de dénudage pour la réalisation de coupes longitudinales et circulaires dans la gaine extérieure d'un câble électrique (6), équipé de rouleaux d'appui (2b, 3b) pour le câble, disposés face à face, d'un rouleau denté (3d) actionnable au moyen d'un levier (7) ou d'une manivelle, et d'une lame circulaire (2d) destinée à couper la gaine extérieure du câble, lesdits rouleaux d'appui (2b, 3b) et le rouleau denté (3d) étant déplaçables sur un même plan s'étendant verticalement par rapport aux axes de rotation des rouleaux, au moins un des rouleaux d'appui avec la lame circulaire (2d), laquelle est montée dans un porte-lame (2c), étant fixé sur un support (2) coulissant (2z), au moins un autre des rouleaux d'appui (2b, 3b) avec le rouleau denté (3d) étant monté sur un deuxième support (3) coulissant (3x), ces deux supports coulissants (2, 3) étant déplaçables le long d'une paire de coulisses (1), parallèles et espacées l'une de l'autre, et formant un châssis rigide avec deux éléments d'espacement et de support (1a, 2b) montés aux extrémités opposées des dites coulisses (1), le support coulissant (2) portant la lame circulaire (2d) étant déplacé en tournant (1r) une poignée rotative (1c) par l'intermédiaire d'une tige filetée (1d) reliée à la poignée rotative, et le support coulissant (3) portant le rouleau denté (3d) étant déplacé par un levier (4) agissant entre les coulisses (1) ou entre l'un des éléments d'espacement et de support (1a, 1b) et le support coulissant (3), ledit levier (4) étant bloqué dans une position de serrage de manière autonome ou par actionnement d'un propre cliquet de blocage.

2. Outil de dénudage selon la revendication 1, **caractérisé en ce que** le levier (4) est une sorte de levier de serrage avec dispositif de blocage autonome, destiné à maintenir la position fermée contre les coulisses (1).

3. Outil de dénudage selon la revendication 1, **caractérisé en ce que** la lame circulaire (2d) est placée de sorte qu'elle puisse se mettre dans deux positions de travail, l'une verticale, parallèle aux axes de rotation des rouleaux d'appui (2b, 3b) et du rouleau denté (3d) pour la réalisation de coupes circulaires, l'autre horizontale, en rotation de 90° par rapport à la première position, pour la réalisation de coupes longitudinales.

4. Outil de dénudage selon les revendications 1 et 3, **caractérisé en ce que** la lame circulaire (2d) est placée de sorte que, outre les positions de travail verticale et horizontale, elle se mettre également dans une ou plusieurs positions inclinées pour la réalisation de coupes hélicoïdales sur la gaine extérieure.

5. Outil de dénudage selon la revendication 1, **caractérisé en ce que** la lame circulaire (2d) est placée de sorte que la partie nue de la lame est réglable, par rapport à la face frontale correspondante (2q) du porte-lame (2c).

6. Outil de dénudage selon la revendication 1, **caractérisé en ce que** le porte-lame (2c) de la lame circulaire (2d) comprend à l'intérieur une douille (2j) rotative (2x) de laquelle dépassent vers l'arrière des poignées d'actionnement (2f) tandis qu'elle présente, sur la face frontale, une paroi (2q) comprenant une fente pour la lame circulaire (2d), **en ce qu'**à l'intérieur de ladite douille (2j) est insérée, coaxialement à cette dernière, une autre douille (2n) sécurisée contre toute rotation par rapport à la douille extérieure (2j) au moyen d'une tige transversale (2m), celle-ci étant déplacée axialement dans des fentes longitudinales (2k) sur la douille extérieure (2j) par rotation (2r) d'une poignée rotative (2e), cette dernière étant reliée à un tourillon (2h) faisant partie d'un tourillon fileté (2i) en prise dans un alésage taraudé situé à l'arrière de la douille intérieure (2n) sur laquelle, sur la face frontale, la lame circulaire (2d) est montée (2p) en rotation (2y), et **en ce que** ledit tourillon fileté (2i) pouvant être tourné (2r) est sécurisé contre un déplacement axial par la prise d'appui, d'un côté, d'un anneau en saillie (2u) contre une surface annulaire intérieure correspondante à l'arrière de la douille extérieure (2j) et, du côté opposé, de la surface annulaire de la poignée rotative (2e).

7. Outil de dénudage selon la revendication 1, **caractérisé en ce que** le support coulissant (3) comportant le rouleau denté (3d) est tiré par un ressort (4h) en direction de l'élément d'espacement et de support (1b).

8. Outil de dénudage selon la revendication 1, **caractérisé en ce que** des éléments élastiques de compression (1f) sont placés entre la tige filetée (1d) et l'élément d'espacement et de support correspondant (1b) entre lequel s'étend la tige filetée.

9. Outil de dénudage pour la réalisation de coupes longitudinales et circulaires dans la gaine extérieure d'un câble électrique (6), équipé de rouleaux d'appui (2b, 3b) pour le câble, disposés face à face, d'un rouleau denté (3d) actionnable au moyen d'un levier (7) ou d'une manivelle, et d'une lame circulaire (2d) destinée à couper la gaine extérieure du câble, lesdits rouleaux d'appui (2b, 3b) et le rouleau denté (3d) étant déplaçables sur un même plan s'étendant verticalement par rapport aux axes de rotation des rouleaux, au moins un des rouleaux d'appui avec la lame circulaire (2d), laquelle est montée dans un porte-lame (2c), étant fixé sur un support coulissant (2), au moins un autre des rouleaux d'appui (2b, 3b) avec le rouleau denté (3d) étant monté sur un deuxième support (3) coulissant (3x), ces deux supports coulissants (2, 3) étant déplaçables le long d'une paire de coulisses (1), parallèles et espacées l'une de l'autre, et formant un châssis rigide avec deux éléments d'espacement et de support (1a, 2b) montés aux extrémités opposées des dites coulisses (1), le support coulissant (2) portant la lame circulaire (2d) étant déplacé en tournant (1r) une poignée rotative (1c) par l'intermédiaire d'une tige filetée (1d) reliée à la poignée rotative, et le support coulissant (3) portant le rouleau denté (3d) étant déplacé par un levier (4) agissant entre les coulisses (1) ou entre l'un des éléments d'espacement et de support (1a, 1b) et le support coulissant (3), ledit levier (4) étant bloqué dans une position de serrage de manière autonome ou par actionnement d'un propre cliquet de blocage, tandis que le support coulissant (3) portant le rouleau denté (3d) est déplacé au moyen d'une tige filetée (1d).
